# EUROPEAN PATENT SPECIFICATION

(11) **EP 2 892 051 B1**
(45) Date of publication and mention of the grant of the patent: **06.12.2017**
(21) Application number: 15150322.4
(22) Date of filing: 07.01.2015
(51) Int. Cl.: G06F 17/22, G06F 17/27, G10L 15/26, G10L 15/08, G10L 17/00, G10L 15/18

(54) **Structuring contents of a meeting**
Strukturierung von Inhalten einer Sitzung
Structuration des contenus d'une réunion

(30) Priority: 07.01.2014 KR 20140002028
(43) Date of publication of application: 08.07.2015
(73) Proprietor: Samsung Electronics Co., Ltd., Gyeonggi-do 443-742 (KR)
(72) Inventor: Lee, Ji Hyun, Gyeonggi-do (KR); Hong, Seok Jin, Gyeonggi-do (KR); Woo, Kyoung Gu, Seoul (KR); Roh, Yo Han, Gyeonggi-do (KR); Yoo, Sang Hyun, Seoul (KR); Lee, Ho Dong, Gyeonggi-do (KR)
(74) Representative: Grünecker Patent- und Rechtsanwälte PartG mbB

(56) References cited:
- US-A1- 2004 205 461
- US-A1- 2010 161 604
- US-A1- 2011 238 409
- KOMINEK J ET AL: "ACCESSING MULTIMEDIA THROUGH CONCEPT CLUSTERING", PROCEEDINGS OF THE SIGCHI CONFERENCE ON HUMAN FACTORS IN COMPUTING SYSTEMS; [CONFERENCE ON HUMAN FACTORS IN COMPUTING SYSTEMS], NEW YORK, NY, USA, 22 March 1997 (1997-03-22), pages 19-26, XP000697113, DOI: 10.1145/258549.258567 ISBN: 978-0-89791-802-2
- GROSS R ET AL: "Towards a multimodal meeting record", MULTIMEDIA AND EXPO, 2000. ICME 2000. 2000 IEEE INTERNATIONAL CONFEREN CE ON NEW YORK, NY, USA 30 JULY-2 AUG. 2000, PISCATAWAY, NJ, USA,IEEE, US, vol. 3, 30 July 2000 (2000-07-30), pages 1593-1596, XP010512812, DOI: 10.1109/ICME.2000.871074 ISBN: 978-0-7803-6536-0

## Description

### BACKGROUND

### 1. Field

The following description relates to an apparatus, a method and a corresponding computer-readable storage medium for structuring contents of a meeting.

### 2. Description of Related Art

Meetings are an important part of work life. In this competitive age where creativity is highly emphasized and encouraged, ideas are usually created and collected in various types of meetings, and many methods and tools have been suggested to provide efficiency for these meetings.

The human brain remembers information by understanding, analyzing, and structuring the information transmitted through voices. However, such remembered information fades as time passes if the information is not remembered through repetitive learning or a strong stimulus. Particularly, in a meeting where various levels of ideas arise unexpectedly, contents and flows of the meeting are difficult to be structured with the human brain alone.

KOMINEK J ET AL: "ACCESSING MULTIMEDIA THROUGH CONCEPT CLUSTERING", PROCEEDINGS OF THE SIGCHI CONFERENCE ON HUMAN FACTORS IN COMPUTING SYSTEMS; NEW YORK, NY, USA, 22 March 1997 (1997-03-22), pages 19-26, discloses a method for accessing multimedia through concept clustering permitting a visual representation of recorded meetings.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is specified in the independent claims. Preferred embodiments are specified in the dependent claims.

Other features and aspects will be apparent from the following detailed description, the drawings, and the claims.

### BRIEF DESCRIPTION OF THE DRAWINGS

FIG. 1 is a block diagram illustrating an example of an apparatus for structuring meeting contents.
FIG. 2 is a block diagram illustrating an example of a controller.
FIG. 3 is a block diagram illustrating another example of a controller.
FIG. 4A is a diagram illustrating an example of a visualization of a structure in which each concept is indented.
FIG. 4B is a diagram illustrating an example of a visualization of a structure in which each concept is constructed in a graph.
FIG. 5 is a flowchart illustrating an example of a method for structuring meeting contents.
FIG. 6 is a flowchart illustrating another example of a method for structuring meeting contents.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the systems, apparatuses and/or methods described herein will be apparent to one of ordinary skill in the art. The progression of processing steps and/or operations described is an example; however, the sequence of and/or operations is not limited to that set forth herein and may be changed as is known in the art, with the exception of steps and/or operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

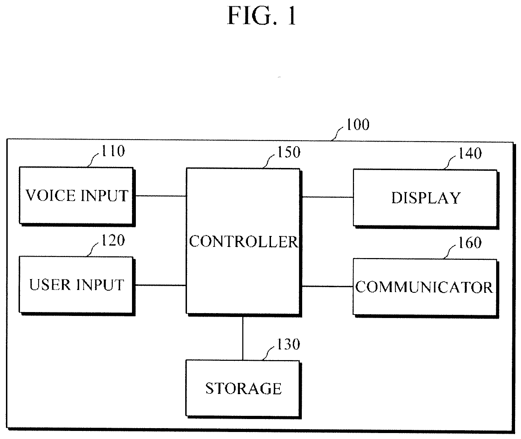

FIG. 1 is a block diagram illustrating an example of an apparatus 100 for structuring meeting contents. Referring to FIG. 1, the apparatus 100 for structuring meeting contents includes a voice input 110, a user input 120, a storage 130, a display 140, a controller 150, and a communicator 160.

The voice input 110 receives input of a user's voice, and may include a microphone built in the apparatus 100 for structuring meeting contents, or an external microphone that may be connected to the apparatus 100 for structuring meeting contents.

The user input 120 receives input of various manipulation signals from a user to generate input data for controlling operations of the apparatus 100 for structuring meeting contents. The user input 120 may include, for example, a keypad, a dome switch, a touchpad (resistive/capacitive), a jog switch, a hardware (H/W) button, and/or other devices known to one of ordinary skill in the art. As will be described later, a touchpad and the display 140, which are mutually layered, may be called a touchscreen.

The storage 130 stores data for the operations of the apparatus 100 for structuring meeting contents, as well as data generated during the operations thereof. Further, the storage 130 may store result data of the operations of the apparatus 100 for structuring meeting contents.

The storage 130 may include at least one type of a storage medium among flash memory type, hard disk type, multi-media card micro type, card type memory (e.g., SD or XD memory, etc.), random access memory (RAM), static random access memory (SRAM), read-only memory (ROM), electrically erasable programmable read only memory (EEPROM), programmable read only memory (PROM), magnetic memory, magnetic disks, optical discs, and/or other storage mediums known to one of ordinary skill in the art. Further, the storage 130 may further include a separate external storage medium.

The display 140 displays information processed by the apparatus 100 for structuring meeting contents. Further, as will be described later, the display 140 may display operation results of the apparatus 100 for structuring meeting contents.

The display 140 may include a liquid crystal display, a thin film transistor liquid crystal display, an organic light emitting diode, a flexible display, a 3-dimensional display, and/or other devices known to one of ordinary skill in the art. Further, the display 140 may include two or more displays. The display 140 and a touchpad may be mutually layered to form a touchscreen, in which the display 140 may be used as an input device, as well as an output device.

The controller 150 controls the overall operations of the apparatus 100 for structuring meeting contents. The controller 150 performs functions of the apparatus 100 for structuring meeting contents according to the signals input from the user input 120, and may display information of an operation status and operation results, for example, on the display 140.

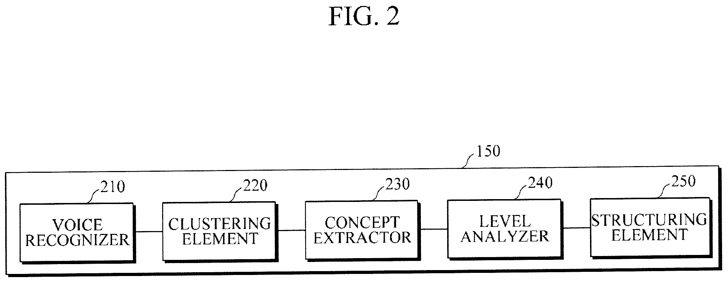

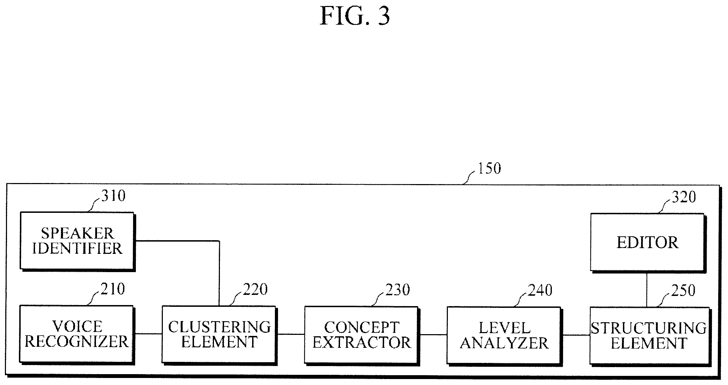

Further, the controller 150 may cluster text data, which has been generated by recognizing a user's speech, into separate subjects, and may analyze levels of concepts of each cluster to structure the concepts. The controller 150 may display the structured concepts on the display 140. The controller 150 will be described later in further detail with reference to FIGS. 2 and 3.

The communicator 160 communicates with other devices to transmit and receive data through a wired or wireless network, such as a wireless Internet, a wireless Intranet, a wireless telephone network, a wireless LAN, a Wi-Fi® network, a Wi-Fi® direct network, a third generation (3G) network, a fourth generation (4G) network, a long term evolution (LTE) network, a Bluetooth® network, an infrared data association (IrDA) network, a radio frequency identification (RFID) network, an ultra-wideband (UWB) network, a Zigbee® network, a near field communication (NFC) network, and/or other networks known to one of ordinary skill in the art. To this end, the communicator 150 may include, but is not limited to, a mobile communication module, a wireless Internet module, a wired Internet module, a Bluetooth® module, an NFC module, and/or other modules known to one of ordinary skill in the art. The apparatus 100 for structuring meeting contents may transmit, through the communicator 160, the operation results to other devices (e.g., a tablet PC), which may individually interact with the apparatus 100 for structuring meeting contents, so that the operation results may be shared with the other devices in real time.

FIG. 2 is a block diagram illustrating an example of the controller 150. Referring to FIG. 2, the controller 150 includes a voice recognizer 210, a clustering element 220, a concept extractor 230, a level analyzer 240, and a structuring element 250.

The voice recognizer 210 recognizes a user's voice input through the voice input 110 to generate text data corresponding to a user's speech. More specifically, the voice recognizer 210 uses a speech to text (STT) engine to generate the text data corresponding to the user's speech. The STT engine is a module for converting input voice signals into a text, using various known STT algorithms.

For example, the voice recognizer 210 may detect a beginning and an end of a user's speech to determine a speech section. More specifically, the voice recognizer 210 may calculate energy of the input voice signals, and classify energy levels based on the calculation, to detect a speech section through a dynamic programming. Further, based on an acoustic model, the voice recognizer 210 may detect a phoneme, which is the smallest unit of sound, from voice signals in the detected speech section, to generate phoneme data, and apply an estimation model of the Hidden Markov Model (HMM) to the generated phoneme data to convert a user's speech into texts. This method for recognizing a user's speech is merely illustrative, and a user's speech may be recognized by other methods.

The clustering element 220 clusters the text data generated by the voice recognizer 210 into separate subjects. The clustering element 220 extracts keywords from each of sentences in the text data, and based on the extracted keywords, classifies the sentences into one or more clusters of similar subjects, thereby generating the clusters. The clustering element 220 may extract the keywords using various keyword extraction rules. For example, the clustering element 220 may syntactically analyze each of the sentences, and based on the analysis, extract a noun as a keyword from a respective sentence.

Further, the clustering element 220 may extract a frequently appearing word or phrase as a keyword from a respective sentence. In this example, the clustering element 220 may refer to a sentence either prior to or subsequent to the respective sentence from which a keyword is to be extracted, and may refer to a plurality of sentences. The keyword extraction method described above is merely illustrative, and other various known keyword extraction algorithms may also be used.

In this example, voice data, and text data generated based on the voice data, may be stream data. Also, the clustering element 220 may control text data by a sliding window of a specific size. That is, the clustering element 220 may cluster text data included in the sliding window of the specific size into separate subjects.

The concept extractor 230 semantically analyzes each cluster generated by the clustering element 220 to extract concepts from each cluster, and create one or more phrases or sentences indicative of each cluster based on the extracted concepts. The concept extractor 230 creates one or more phrases or sentences indicative of each cluster by using a document summarization method. More specifically, the concept extractor 230 may create one or more phrases or sentences indicative of each cluster by various document summarization methods, including, for example, a summarization by extraction method in which a sentence that may represent its cluster is extracted from a text in the cluster to be reconstructed, or an abstraction method in which a sentence is created by using an extracted keyword.

The level analyzer 240 analyzes a level of each extracted concept, in which a level of each concept refers to a relationship between concepts of higher and/or lower levels. In this example, the level analyzer 240 may analyze a level of each concept based on an ontology with a hierarchical structure of concepts. The ontology may be provided in advance in the apparatus 100 for structuring meeting contents, or may be provided in advance in an external server.

When the ontology is provided in advance in an external server, the level analyzer 240 may communicate with the external server through the communicator 160. That is, the level analyzer 240 may request the external server to analyze a level of each concept through the communicator 160, and may receive analysis results of the level of each concept from the external server. In this example, upon receiving the request for analyzing the level of each concept, the external server may analyze the level of each concept based on the provided ontology, and transmit analysis results to the level analyzer 240 through the communicator 160.

The structuring element 250 structures each concept based on the analysis results of the level analyzer 240. For example, the structuring element 250 may structure each concept, so that a relationship between concepts of higher and/or lower levels may be indicated.

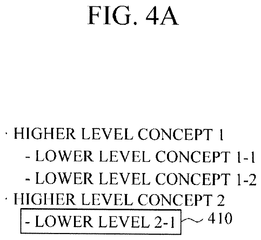

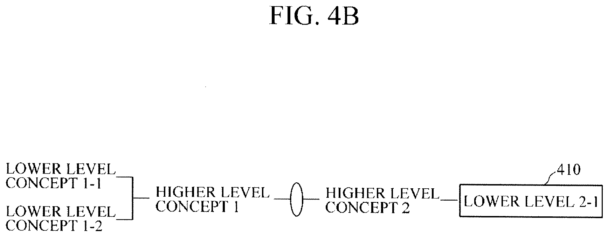

For example, the structuring element 250 may structure each concept by using an indentation type or a graph. The indentation type refers to a structuring method using bullet points and indenting each level in formatted strings of characters, and the graph type refers to a structuring method using a graph that includes nodes and edges. Detailed description thereof will be given later with reference to FIG. 4.

FIG. 3 is a block diagram illustrating another example of the controller 150. Referring to FIG. 3, the controller 150 further includes a speaker identifier 310 and an editor 320, in which like reference numerals indicate like elements with respect to FIG. 2, and thus, detailed descriptions thereof will be omitted.

The speaker identifier 310 identifies user voices by analyzing input voices. In an example, the speaker identifier 310 may extract voice features from input voices, and identify speakers of the input voices based on the extracted voice features.

In another example, the speaker identifier 310 may identify speakers of input voices by a speaker recognition model created in advance. The speaker recognition model is a model created in advance through a process of learning voice features extracted from users' voices, and may be created by various model creation methods, such as a Gaussian Mixture Model (GMM), a Hidden Markov Model (HMM), a Support Vector Machine (SVM), for example. Although FIG. 3 illustrates the speaker identifier 310 and the voice recognizer 210 as being configured as separate elements that perform separate functions, a configuration of the speaker identifier 310 and the voice recognizer 210 is not limited thereto, and the speaker identifier 310 and the voice recognizer 210 may be configured as one element that performs all the functions of the speaker identifier 310 and the voice recognizer 210.

The editor 320 edits each structured concept according to a user's instruction. For example, the editor 320 may edit each structured concept by receiving a user's instruction through the user input 120 and changing a structure or contents of each concept. In this manner, a user may edit structured meeting contents.

The controller 150 illustrated in FIG. 3 or FIG. 4 may be implemented as a microprocessor that executes program codes.

FIG. 4A is a diagram illustrating an example of a visualization of a structure in which each concept is indented. Referring to FIG. 4A, the controller 150 structures each concept through indentation of each level, so that a relationship between concepts of higher and/or lower levels may be identified.

In this example, a format may be predetermined, and characters of a higher level concept may be shown bigger and thicker than characters of a lower level concept. Further, a border cursor 410 that indicates a position to be edited is also displayed so that each concept may be edited according to a user's instruction. However, the above example is merely illustrative, and a structuring method is not limited thereto.

FIG. 4B is a diagram illustrating an example of a visualization of a structure in which each concept is constructed in a graph. Referring to FIG. 4B, the controller 150 structures each concept in a graph that includes nodes and edges so that a level of each concept, i.e., a relationship between concepts of higher and/or lower levels, may be identified. Each node indicates a concept, and each edge indicates a relationship between concepts of higher and/or lower levels. Further, the border cursor 410 that indicates a position to be edited is also displayed so that each concept may be edited according to a user's instruction.

For visualizing each structured concept, FIGS. 4A and 4B illustrates a display of a border cursor that indicates a position to be edited so that each concept may be edited. However, a configuration is not limited thereto, and a cursor, a pointer, and/or the like may be displayed.

When a border cursor is displayed, the border cursor may be depicted in various shapes and colors, such as by a straight line, a wavy line, an alternating long and short dash line, an alternating long and two short dashes line, and/or the like. The border cursor may be highlighted, and/or a displayed cursor may be set to fade in or fade out at regular intervals. The method of identifying a position to be edited so that each concept may be edited is merely illustrative, other various methods may also be used, and the above method may be changed by a user.

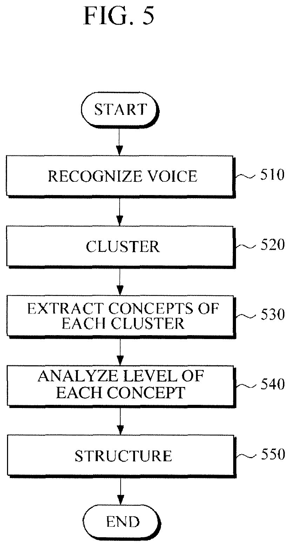

FIG. 5 is a flowchart illustrating an example of a method for structuring meeting contents. Referring to FIG. 5, in operation 510, the method of structuring meeting contents includes recognizing a user's voice to generate text data corresponding to the user's voice. For example, the apparatus 100 for structuring meeting contents may generate text data corresponding to a user's voice by using a Speech to Text (STT) engine.

In operation 520, the method includes clustering or classifying the generated text data into one or more clusters of separate subjects, thereby generating the clusters. The apparatus 100 for structuring meeting contents extracts keywords from each sentence of the text data, and classifies sentences into one or more clusters of similar subjects, thereby generating the clusters. In this example, the apparatus 100 for structuring meeting contents may extract keywords from each sentence of the text data using various keyword extraction rules, as described above with reference to FIG. 2.

Further, voice data, and text data generated based on the voice data, may be stream data. In this example, the apparatus 100 for structuring meeting contents may control the text data by a sliding window of a specific size. That is, the apparatus 100 for structuring meeting contents may cluster text data included in the sliding window of the specific size into separate subjects.

In operation 530, the method includes extracting concepts of each cluster, and generating one or more phrases or sentences that indicate each cluster based on the extracted concepts. The apparatus 100 for structuring meeting contents may extract concepts of each cluster through semantic analysis, and generate one or more phrases or sentences that indicate each cluster based on the extracted concepts. The apparatus 100 for structuring meeting contents may use various document summarization methods.

In operation 540, the method includes analyzing a level of each concept. For example, the apparatus 100 for structuring meeting contents may analyze a level of each concept based on an ontology with a hierarchical structure of concepts.

In operation 540, the method includes structuring each concept so that a relationship between concepts of higher and/or lower levels may be identified. For example, the apparatus 100 for structuring meeting contents may structure each concept by using an indentation type or a graph type, for example. The indentation type is described with reference to FIG. 4A above, and the graph type is described with reference to FIG. 4B above.

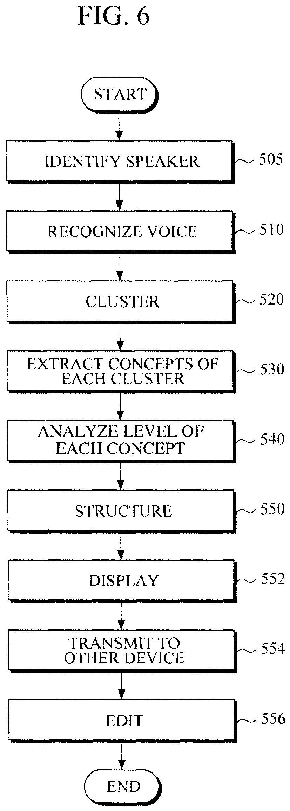

FIG. 6 is a flowchart illustrating another example of a method for structuring meeting contents. Referring to FIG. 6, in operation 505, the method for structuring meeting contents further includes identifying a speaker of an input voice by analyzing the input voice. For example, the apparatus 100 for structuring meeting contents may extract voice features from a user's input voice to identify a speaker of the input voice based on the extracted voice features.

Further, in operation 552, the method further includes displaying each structured concept. For example, the apparatus 100 for structuring meeting contents may display each structured concept.

In addition, in operation 554, the method further includes transmitting each structured concept to another external device. For example, the apparatus 100 for structuring meeting contents may transmit each structured concept to other devices. In this manner, meeting contents structured by the apparatus 100 for structuring meeting contents may be shared with the other devices (e.g., a tablet PC) that may individually interact with the apparatus 100 for structuring meeting contents.

Moreover, in operation 556, the method further includes editing each structured concept according to a user's instruction. For example, the apparatus 100 for structuring meeting contents may edit each structured concept by changing a structure or contents of each concept.

The various modules, elements, and methods described above may be implemented using one or more hardware components, one or more software components, or a combination of one or more hardware components and one or more software components.

A hardware component may be, for example, a physical device that physically performs one or more operations, but is not limited thereto. Examples of hardware components include microphones, amplifiers, low-pass filters, high-pass filters, band-pass filters, analog-to-digital converters, digital-to-analog converters, and processing devices.

A software component may be implemented, for example, by a processing device controlled by software or instructions to perform one or more operations, but is not limited thereto. A computer, controller, or other control device may cause the processing device to run the software or execute the instructions. One software component may be implemented by one processing device, or two or more software components may be implemented by one processing device, or one software component may be implemented by two or more processing devices, or two or more software components may be implemented by two or more processing devices.

A processing device may be implemented using one or more general-purpose or special-purpose computers, such as, for example, a processor, a controller and an arithmetic logic unit, a digital signal processor, a microcomputer, a field-programmable array, a programmable logic unit, a microprocessor, or any other device capable of running software or executing instructions. The processing device may run an operating system (OS), and may run one or more software applications that operate under the OS. The processing device may access, store, manipulate, process, and create data when running the software or executing the instructions. For simplicity, the singular term "processing device" may be used in the description, but one of ordinary skill in the art will appreciate that a processing device may include multiple processing elements and multiple types of processing elements. For example, a processing device may include one or more processors, or one or more processors and one or more controllers. In addition, different processing configurations are possible, such as parallel processors or multi-core processors.

A processing device configured to implement a software component to perform an operation A may include a processor programmed to run software or execute instructions to control the processor to perform operation A. In addition, a processing device configured to implement a software component to perform an operation A, an operation B, and an operation C may have various configurations, such as, for example, a processor configured to implement a software component to perform operations A, B, and C; a first processor configured to implement a software component to perform operation A, and a second processor configured to implement a software component to perform operations B and C; a first processor configured to implement a software component to perform operations A and B, and a second processor configured to implement a software component to perform operation C; a first processor configured to implement a software component to perform operation A, a second processor configured to implement a software component to perform operation B, and a third processor configured to implement a software component to perform operation C; a first processor configured to implement a software component to perform operations A, B, and C, and a second processor configured to implement a software component to perform operations A, B, and C, or any other configuration of one or more processors each implementing one or more of operations A, B, and C. Although these examples refer to three operations A, B, C, the number of operations that may implemented is not limited to three, but may be any number of operations required to achieve a desired result or perform a desired task.

Software or instructions for controlling a processing device to implement a software component may include a computer program, a piece of code, an instruction, or some combination thereof, for independently or collectively instructing or configuring the processing device to perform one or more desired operations. The software or instructions may include machine code that may be directly executed by the processing device, such as machine code produced by a compiler, and/or higher-level code that may be executed by the processing device using an interpreter. The software or instructions and any associated data, data files, and data structures may be embodied permanently or temporarily in any type of machine, component, physical or virtual equipment, computer storage medium or device, or a propagated signal wave capable of providing instructions or data to or being interpreted by the processing device. The software or instructions and any associated data, data files, and data structures also may be distributed over network-coupled computer systems so that the software or instructions and any associated data, data files, and data structures are stored and executed in a distributed fashion.

For example, the software or instructions and any associated data, data files, and data structures may be recorded, stored, or fixed in one or more non-transitory computer-readable storage media. A non-transitory computer-readable storage medium may be any data storage device that is capable of storing the software or instructions and any associated data, data files, and data structures so that they can be read by a computer system or processing device. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, or any other non-transitory computer-readable storage medium known to one of ordinary skill in the art.

Functional programs, codes, and code segments for implementing the examples disclosed herein can be easily constructed by a programmer skilled in the art to which the examples pertain based on the drawings and their corresponding descriptions as provided herein.

As a non-exhaustive illustration only, a device described herein may refer to mobile devices such as, for example, a cellular phone, a smart phone, a wearable smart device (such as, for example, a ring, a watch, a pair of glasses, a bracelet, an ankle bracket, a belt, a necklace, an earring, a headband, a helmet, a device embedded in the cloths or the like), a personal computer (PC), a tablet personal computer (tablet), a phablet, a personal digital assistant (PDA), a digital camera, a portable game console, an MP3 player, a portable/personal multimedia player (PMP), a handheld e-book, an ultra mobile personal computer (UMPC), a portable lab-top PC, a global positioning system (GPS) navigation, and devices such as a high definition television (HDTV), an optical disc player, a DVD player, a Blue-ray player, a setup box, or any other device capable of wireless communication or network communication consistent with that disclosed herein. In a non-exhaustive example, the wearable device may be self-mountable on the body of the user, such as, for example, the glasses or the bracelet. In another non-exhaustive example, the wearable device may be mounted on the body of the user through an attaching device, such as, for example, attaching a smart phone or a tablet to the arm of a user using an armband, or hanging the wearable device around the neck of a user using a lanyard.

While this disclosure includes specific examples, it will be apparent to one of ordinary skill in the art that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or supplemented by other components or their equivalents. Therefore, the invention is defined not by the detailed description, but by the claims, and all variations within the scope of the claims are to be construed as being included in the disclosure.

## Claims

1. An apparatus configured to structure contents of a meeting, the apparatus comprising:
a voice recognizer configured to recognize a voice to generate text corresponding to the recognized voice;
a clustering element configured to cluster the generated text into subjects to generate one or more clusters;
a concept extractor configured to extract concepts indicative of each of the generated clusters by using a document summarization method;
a level analyzer configured to analyze a level of each of the extracted concepts; and
a structuring element configured to structure each of the extracted concepts based on the analysis,
wherein the clustering element is configured to:
extract keywords from each sentence of the generated text; and
cluster the sentences of the generated text into the subjects based on the extracted keywords; and
wherein the concept extractor is configured to:
create one or more phrases or sentences that indicate each of the generated clusters based on the extracted concepts.

2. The apparatus of claim 1, wherein the clustering element is further configured to:
cluster text in a sliding window of a size into the subjects.

3. The apparatus of one of claims 1 to 2, wherein the level analyzer is further configured to:
analyze the level of each of the extracted concepts based on an ontology provided in advance.

4. The apparatus of one of claims 1 to 3, wherein the structuring element is further configured to:
structure each of the extracted concepts, using an indentation type in which each of the extracted concepts is indented to indicate a relationship between concepts of higher and/or lower levels, or a graph type in which each of the extracted concepts is a node, and the relationship between the concepts of the higher and/or lower levels is an edge.

5. The apparatus of one of claims 1 to 4, further comprising one or more of:
a display configured to display each of the structured concepts;
an editor configured to edit each of the structured concepts by changing a structure or contents of each of the structured concepts; and
a communicator configured to transmit each of the structured concepts to another device.

6. The apparatus of one of claims 1 to 5, further comprising:
a speaker identifier configured to identify a speaker of the voice.

7. A method of structuring contents of a meeting, the method comprising:
recognizing a voice to generate text corresponding to the recognized voice;
clustering the generated text into subjects to generate one or more clusters;
extracting concepts indicative of each of the generated clusters by using a document summarization method;
analyzing a level of each of the extracted concepts; and
structuring each of the extracted concepts based on the analysis,
wherein the clustering of the generated text comprises one or more of:
extracting keywords from each sentence of the generated text and clustering the sentences oft the generated text into the subjects based on the extracted keywords; and
clustering text in a sliding window of a size into the subjects; and
wherein the extracting of the concepts comprises:
creating one or more phrases or sentences that indicate each of the generated clusters based on the extracted concepts.

8. The method of one of claim 7, wherein the analyzing of the level of each of the extracted concepts comprises:
analyzing the level of each of the extracted concepts based on an ontology provided in advance.

9. The method of one of claims 7 to 8, wherein the structuring of each of the extracted concepts comprises:
structuring each of the extracted concepts, using an indentation type in which each of the extracted concepts is indented to indicate a relationship between concepts of higher and/or lower levels, or a graph type in which each of the extracted concepts is a node, and the relationship between the concepts of the higher and/or lower levels is an edge.

10. The method of one of claims 7 to 9, further comprising one or more of:
displaying each of the structured concepts;
editing each of the structured concepts by changing a structure or contents of each of the structured concepts;
transmitting each of the structured concepts to another device; and
identifying a speaker of the voice.

11. A computer-readable storage medium storing instructions adapted to perform the method of any one of claims 7 to 10 when executed by one or more processors.

## Patentansprüche

1. Vorrichtung, die konfiguriert ist zum Strukturieren von Inhalten einer Sitzung, wobei die Vorrichtung umfasst:
einen Spracherkenner, der konfiguriert ist zum Erkennen einer Stimme, um einen Text in Entsprechung zu der erkannten Stimme zu erzeugen,
ein Gruppierungselement, das konfiguriert ist zum Gruppieren des erzeugten Texts in Themen, um eine oder mehrere Gruppierungen zu erzeugen,
einen Konzeptextrahierer, der konfiguriert ist zum Extrahieren von Konzepten, die jede der erzeugten Gruppierungen angeben, unter Verwendung einer Dokumentzusammenfassungsmethode,
einen Ebenenanalysierer, der konfiguriert ist zum Analysieren einer Ebene jedes der extrahierten Konzepte, und
ein Strukturierungselement, das konfiguriert ist zum Strukturieren jedes der extrahierten Konzepte basierend auf der Analyse,
wobei das Gruppierungselement konfiguriert ist zum:
Extrahieren von Schüsselwörtern aus jedem Satz des erzeugten Texts, und
Gruppieren der Sätze des erzeugten Texts in die Themen basierend auf den extrahierten Schlüsselwörtern,
wobei der Konzeptextrahierer konfiguriert ist zum:
Erstellen einer oder mehrerer Phrasen oder Sätze, die jede der erzeugten Gruppierungen angeben, basierend auf den extrahierten Konzepten.

2. Vorrichtung nach Anspruch 1, wobei das Gruppierungselement weiterhin konfiguriert ist zum:
Gruppieren von Text in einem Verschiebungsfenster einer Größe in die Themen.

3. Vorrichtung nach einem der Ansprüche 1 bis 2, wobei der Ebenenanalysierer weiterhin konfiguriert ist zum:
Analysieren der Ebene jedes der extrahierten Konzepte basierend auf einer zuvor vorgesehenen Ontologie.

4. Vorrichtung nach einem der Ansprüche 1 bis 3, wobei das Strukturierungselement weiterhin konfiguriert ist zum:
Strukturieren jedes der extrahierten Konzepte unter Verwendung eines Einrückungstyps, wobei jedes der extrahierten Konzepte eingerückt wird, um eine Beziehung zwischen Konzepten höherer und/oder niedrigerer Ebenen anzugeben, oder eines Graphentyps, wobei jedes der extrahierten Konzepte ein Knoten ist und die Beziehung zwischen den Konzepten der höheren und/oder niedrigeren Ebenen eine Linie ist.

5. Vorrichtung nach einem der Ansprüche 1 bis 4, die weiterhin eines oder mehrere der Folgenden umfasst:
eine Anzeige, die konfiguriert ist zum Anzeigen jedes der strukturierten Konzepte,
einen Editor, der konfiguriert ist zum Bearbeiten jedes der strukturierten Konzepte durch das Ändern einer Struktur oder der Inhalte jedes der strukturierten Konzepte, und
einen Kommunikator, der konfiguriert ist zum Senden jedes der strukturierten Konzepte an eine andere Einrichtung.

6. Vorrichtung nach einem der Ansprüche 1 bis 5, die weiterhin umfasst:
einen Sprecher-Identifizierer, der konfiguriert ist zum Identifizieren eines Sprechers der Stimme.

7. Verfahren zum Strukturieren von Inhalten einer Sitzung, wobei das Verfahren umfasst:
Erkennen einer Stimme, um einen Text in Entsprechung zu der erkannten Stimme zu erzeugen,
Gruppieren des erzeugten Texts in Themen, um eine oder mehrere Gruppierungen zu erzeugen,
Extrahieren von Konzepten, die jede der erzeugten Gruppierungen angeben, unter Verwendung einer Dokumentzusammenfassungsmethode,
Analysieren einer Ebene jedes der extrahierten Konzepte, und
Strukturieren jedes der extrahierten Konzepte basierend auf der Analyse,
wobei das Gruppieren des erzeugten Texts eines oder mehrere der Folgenden umfasst:
Extrahieren von Schüsselwörtern aus jedem Satz des erzeugten Texts, und Gruppieren der Sätze des erzeugten Texts in die Themen basierend auf den extrahierten Schlüsselwörtern, und
Gruppieren von Text in einem Verschiebungsfenster einer Größe in die Themen,
wobei das Extrahieren des Konzepts umfasst:
Erstellen einer oder mehrerer Phrasen oder Sätze, die jede der erzeugten Gruppierungen angeben, basierend auf den extrahierten Konzepten.

8. Verfahren nach Anspruch 7, wobei das Analysieren der Ebene jedes der extrahierten Konzepte umfasst:
Analysieren der Ebene jedes der extrahierten Konzepte basierend auf einer zuvor vorgesehenen Ontologie.

9. Verfahren nach Anspruch 7 oder 8, wobei das Strukturieren jedes der extrahierten Konzepte umfasst:
Strukturieren jedes der extrahierten Konzepte unter Verwendung eines Einrückungstyps, wobei jedes der extrahierten Konzepte eingerückt wird, um eine Beziehung zwischen Konzepten höherer und/oder niedrigerer Ebenen anzugeben, oder eines Graphentyps, wobei jedes der extrahierten Konzepte ein Knoten ist und die Beziehung zwischen den Konzepten der höheren und/oder niedrigeren Ebenen eine Linie ist.

10. Verfahren nach einem der Ansprüche 7 bis 9, das weiterhin eines oder mehrere der Folgenden umfasst:
Anzeigen jedes der strukturierten Konzepte,
Bearbeiten jedes der strukturierten Konzepte durch das Ändern einer Struktur oder der Inhalte jedes der strukturierten Konzepte,
Senden jedes der strukturierten Konzepte an eine andere Einrichtung, und
Identifizieren eines Sprechers der Stimme.

11. Computerlesbares Speichermedium, das Befehle speichert, die ausgebildet sind, um bei einer Ausführung durch einen oder mehrere Prozessoren das Verfahren gemäß den Ansprüchen 7 bis 10 auszuführen.

## Revendications

1. Dispositif configuré pour structurer des contenus d'une réunion, le dispositif comprenant :
un identificateur vocal configuré pour identifier une voix pour générer un texte correspondant à la voix identifiée ;
un élément d'agrégation configuré pour agréger le texte généré en des sujets pour générer un ou plusieurs agrégats ;
un extracteur de concepts pour extraire des concepts représentatifs de chacun des agrégats générés en utilisant une méthode de synthèse de document ;
un analyseur de niveau configuré pour analyser un niveau de chacun des concepts extraits ; et
un élément de structuration configuré pour structurer chacun des concepts extraits en fonction de l'analyse,
dans lequel l'élément d'agrégation est configuré pour :
extraire des mots-clés de chaque phrase du texte généré ; et
agréger les phrases du texte généré dans les sujets fondés sur les mots-clés extraits ; et
dans lequel l'extracteur de concepts est configuré pour :
créer une ou plusieurs expressions ou phrases qui indiquent chacun des agrégats générés en fonction des concepts extraits.

2. Le dispositif de la revendication 1, dans lequel l'élément d'agrégation est configuré en outre pour :
agréger un texte dans une fenêtre coulissante d'une taille définie dans les sujets.

3. Le dispositif d'une des revendications 1 à 2, dans lequel l'analyseur de niveau est configuré en outre pour :
analyser le niveau de chacun des concepts extraits selon une ontologie fournie à l'avance.

4. Le dispositif d'une des revendications 1 à 3, dans lequel l'élément de structuration est configuré en outre pour :
structurer chacun des concepts extraits, en utilisant un type d'indentation dans lequel chacun des concepts extraits est indenté pour indiquer une relation entre des concepts de niveaux supérieur et/ou inférieur, ou un type de graphique dans lequel chacun des concepts extraits est un noeud, et la relation entre les concepts des niveaux supérieur et/ou inférieur est une branche.

5. Le dispositif d'une des revendications 1 à 4, comprenant en outre un ou plusieurs de :
un écran configuré pour afficher chacun des concepts structurés ;
un éditeur configuré pour modifier chacun des concepts structurés en changeant une structure ou un contenu de chacun des concepts structurés ; et
un communicateur configuré pour transmettre chacun des concepts structurés à un autre dispositif.

6. Le dispositif d'une des revendications 1 à 5, comprenant en outre :
un identificateur d'orateur configuré pour identifier un orateur par la voix.

7. Procédé de structuration de contenus d'une réunion, le procédé comprenant :
l'identification d'une voix pour générer un texte correspondant à la voix identifiée ;
l'agrégation du texte généré en des sujets pour générer un ou plusieurs agrégats ;
l'extraction de concepts représentatifs de chacun des agrégats générés en utilisant une méthode de synthèse de document ;
l'analyse d'un niveau de chacun des concepts extraits ; et
la structuration de chacun des concepts extraits en fonction de l'analyse,
dans lequel l'agrégation du texte généré comprend un ou plusieurs des éléments suivants :
l'extraction de mots-clés à partir de chaque phrase du texte généré et l'agrégation des phrases du texte généré en les sujets fondés sur les mots-clés extraits ; et
l'agrégation d'un texte dans une fenêtre coulissante d'une taille définie dans les sujets ; et
dans lequel l'extraction des concepts comprend :
la création d'une ou plusieurs expressions ou phrases qui indiquent chacun des agrégats générés en fonction des concepts extraits.

8. Le procédé d'une de la revendication 7, dans lequel l'analyse du niveau de chacun des concepts extraits comprend :
l'analyse du niveau de chacun des concepts extraits selon une ontologie fournie à l'avance.

9. Le procédé d'une des revendications 7 à 8, dans lequel la structuration de chacun des concepts extraits comprend :
la structuration de chacun des concepts extraits, en utilisant un type d'indentation dans lequel chacun des concepts extraits est indenté pour indiquer une relation entre des concepts de niveaux supérieur et/ou inférieur, ou un type de graphique dans lequel chacun des concepts extraits est un noeud, et la relation entre les concepts des niveaux supérieur et/ou inférieur est une branche.

10. Le procédé d'une des revendications 7 à 9, comprenant en outre un ou plusieurs de :
l'affichage de chacun des concepts structurés ;
la modification de chacun des concepts structurés en changeant une structure ou un contenu de chacun des concepts structurés ; et
la transmission de chacun des concepts structurés à un autre dispositif ; et
l'identification d'un orateur par la voix.

11. Support de stockage lisible par un ordinateur stockant des instructions adaptées pour exécuter le procédé d'une des revendications 7 à 10 lorsqu'elles sont exécutées par un ou plusieurs processeurs.
